# EUROPEAN PATENT APPLICATION

(11) **EP 3 886 115 A1**
(43) Date of publication of application: **29.09.2021**
(21) Application number: 18938428.2
(22) Date of filing: 04.12.2018
(51) Int. Cl.: G21D 3/00

(54) **NUCLEAR POWER PLANT DIGITAL AUXILIARY CONTROL PANEL SYSTEM AND DESIGN METHOD, AND CONTROL SYSTEM**

(30) Priority: 31.10.2018 CN 201811305009
(71) Applicant: China Nuclear Power Engineering Company Ltd., Shenzen, Gaungdong 518000 (CN); China General Nuclear Power Group, Futian District Shenzhen Guangdong 518000 (CN); CGN Power Co., Ltd., Futian District Shenzhen Guangdong 518000 (CN)
(72) Inventor: ZOU, Jie, Shenzhen, Guangdong 518000 (CN); HUANG, Weijun, Shenzhen, Guangdong 518000 (CN); ZHANG, Jianbo, Shenzhen, Guangdong 518000 (CN); ZHANG, Xuegang, Shenzhen, Guangdong 518000 (CN); ZHOU, Yichao, Shenzhen, Guangdong 518000 (CN); CHENG, Bo, Shenzhen, Guangdong 518000 (CN); MEI, Shibai, Shenzhen, Guangdong 518000 (CN); WANG, Yan, Shenzhen, Guangdong 518000 (CN); ZHANG, Gang, Shenzhen, Guangdong 518000 (CN)
(74) Representative: Greaves Brewster LLP
(86) International application number: PCT/CN2018/119080
(87) International publication number: WO 2020/087647

(57) **Abstract**

The present invention provides a nuclear power plant digital auxiliary control panel system and design method, and control system. The nuclear power plant digital auxiliary control panel system includes a list establishment module for acquiring operation running standards and historical operation running data of the nuclear power plant, and determining a minimum configuration function list according to the operation running standards and the historical operation running data of the power plant; and a design module for classifying the minimum configuration function list and designing a minimum control panel system according to the classifications. When a main digital human-machine interface fails, the monitoring and control of the nuclear power plant is completed effectively via the digital auxiliary control panel system based on the minimum configuration, thereby satisfying the minimum collection required for safe running of the nuclear power plant and saving the costs to the greatest extent, so that the safe running of the nuclear power plant is effectively ensured.

## Description

### FIELD OF THE INVENTION

The present invention generally relates to nuclear power plants and, more particularly, to a nuclear power plant digital auxiliary control panel system and design method, and control system.

### BACKGROUND OF THE INVENTION

Before the introduction of digital control system (DCS) into nuclear power plants, a main control room generally uses conventional hardware panels to realize the operation and control of the nuclear power plant, and the control and display equipment in each system are presented to the operator via fixed man-machine interface. Although the scale of the hardware tray is large, its advantage is that the operator can quickly find and operate the corresponding system equipments, and there is no lack of system information. After the DCS technology is widely used in nuclear power plants, the main control room generally adopts a digital human-machine interface. The operator needs to select corresponding system via the screen menu for monitoring and control. The operator need more time to select corresponding system via the screen. Therefore, in emergency accident conditions, the operator may not be able to respond in time.

In the conventional hardware main control room or early digital main control room, most of the panel stations use a large number of control buttons, display lights and light sign alarms. The number of panel station equipments is large. The scale and volume of the panel station are large, and the space required is larger. A large number of hard-wired equipments and cables lead to a large number of DCS cabinets too. Although the equipment process is intuitive, the operation manner is generally one-to-one, that is, an operation corresponds to a piece of equipment. The interaction between the equipments is complicated. The interface is relatively scattered, the operator's workload is quite large, and the later maintenance and repair costs are high. The regular test method is very troublesome, which may cause the problems of difficulty in synchronizing operation and monitoring and poor flexibility when the system fails.

The prior art lacks a nuclear power plant digital auxiliary control panel system based on the minimum configuration, to meet the minimum collection required for safe operation of the nuclear power plant.

### SUMMARY OF THE INVENTION

One object of the present invention is to provide a nuclear power plant digital auxiliary control panel system and design method, and control system, which can overcome at least one disadvantages in the prior art.

According to one embodiment of the present invention, a nuclear power plant digital auxiliary control panel system includes:
a list establishment module, connected to a nuclear power plant database, for acquiring operation running standards and historical operation running data of the nuclear power plant, and determining a minimum configuration function list according to the operation running standards and historical operation running data of the power plant; and
a design module, connected to the list establishment module, for classifying the minimum configuration function list and designing an auxiliary control panel based on the minimum configuration according to the classification.

According to one aspect of the present application, the list establishment module further includes:
a standard list module, connected to the nuclear power plant database, for analyzing operation objectives in emergency procedures and functions required to complete the objectives based on the operation standards of the nuclear power plant, and establishing a design-based minimum design configuration list;
a verification list module, connected to the nuclear power plant database, for simulating emergency accident environment, recording systems and equipments needed in actual accident process, checking and sorting out missing system and equipment information, and establishing a verification-based minimum verification configuration list based on the historical operation running data;
a comparison module, connected to the standard list module and the verification list module respectively, for comparing and analyzing the design-based minimum design configuration list and the verification-based minimum verification configuration list, to determine a minimum configuration function list required for the target accident.

According to one aspect of the present application, the comparison module includes: an analysis module, a verification module and a determination module respectively connected to the analysis module, and a confirmation module connected to the verification module;
the analysis module is confirgured for analyzing the received design-based minimum design configuration list and the verification-based minimum verification configuration list, and sending the analysis results to the verification module and the determination module;
the verification module is configured for verifying whether the design-based minimum design configuration list meets the defined requirements based on the analysis results and sending the verified results to the confirmation module, if the design-based minimum design configuration list is greater than or equal to the verification-based minimum verification configuration list;
the determination module is configured for redefining the minimum list based on the analysis result that the design-based minimum design configuration list being less than the verification-based minimum verification configuration list, and adding the verification-based minimum verification configuration list to the design-based minmum design configuration list for reverification, if the definition of the minimum configuration function list is met;
the verification module is also configured for receiving from the confirmation module and adding an excess list in the verification-based minimum verification configuration list to the design-based minimum design configuration list, and reverifying whether the minimum design list meets the defined requirements; and
the confirmation module is configured for confirming the minimum configuration function list required by the target accident according to the verification results of the determination module and the verification module.

According to one aspect of the present application, the determination module is also configured for deleting the non-conforming information in the minimum verification configuration list, if the design-based minimum design configuration list is smaller than the verification-based minimum verification configuration list, and the redefined minimum list fails to meet the definition requirements.

According to one aspect of the present application, the design module further includes: a classification module connected to the list establishment module, a configuration module connected to the classification module, and a setup module connected to the configuration module;
the classification module is configured for classifying the minimum configuration function list, including classifying the non-safety-level digital control and display equipment, classifying the safety-level digital control and display equipment, and classifying the safety-level equipment using conventional hardware technology;
the configuration module is configured for configuring system softwares and hardware equipments according to different classifications, to design an auxiliary control panel based on the minimum configuration; and
the setup module is configured for setting up the minimum configuration auxiliary control panel to a specified area for monitoring and operation according to the designed auxiliary control panel based on the minimum configuration.

According to one aspect of the present application, the minimum control panel system includes a first panel station for nuclear island operators, a second panel station for safety engineers and officers, and a third panel station for conventional island operators, and each panel station include an accident entrance alarm information. Each panel station includes three areas sequentially distributed from upper, middle and lower parts of the panel, and each panel is provided with a display area of the accident entrance alarm information at an upper area thereof.

The present invention also provides a design method for nuclear power plant digital auxiliary control panel including the steps of:
S100: acquiring operation running standards and historical operation running data of the nuclear power plant, and determining a minimum configuration function list according to the operation running standards and historical operation running data of the nuclear power plant; and
S200: classifying the minimum configuration function list, and designing an auxiliary control panel based on the minimum configuration according to the classification.

Accordign to one aspect of the present application, step S100 of the design method includes the steps of:
S110: analyzing operation objectives and functions required to complete the objectives in emergency procedures based on operation running standards of the nuclear power plant, and establishing a design-based minimum design configuration list;
S120: simulating emergency accident environment, recording systems and equipments needed in actual accident process, checking and sorting out missing system and equipment information, and establishing a verification-based minimum verification configuration list based on the historical operation running data; and
S130: comparing and analyzing the design-based minimum design configuration list and the verification-based minimum verification configuration list, to determine the minimum configuration function list required for the target accident.

According to one aspect of the present application, step S130 of the design method further includes the steps of:
S131: analyzing the received design-based minimum design configuration list and the verification-based minimum verification configuration list, and sending the analysis results;
S132: verifying whether the design-based minimum design configuration list meets the defined requirements based on the analysis results and sending the verified results, if the design-based minimum design configuration list is greater than or equal to the verification-based minimum verification configuration list;
S133: redefining the minimum list based on the analysis results that the design-based minimum design configuration list being less than the verification-based minimum verification configuration list, and adding the verification-based minimum verification configuration list to the design-based minmum design configuration list for reverification, if the definition of the minimum configuration function list is met;
S134: receiving and adding an excess list from the verification-based minimum verification configuration list to the design-based minimum design configuration list, and reverifying whether the minimum design list meets the defined requirements; and
S135: confirming the minimum configuration function list required by the target accident according to the verification results in S132 and S133.

The present invention also provides a nuclear power plant digital control system, for use in a nuclear power plant digital system including a main control room. The main control room includes a main controller, a diversified human-machine interface processing panels respectively connected to the main controller, a serious accidents panel, an emergency control panel, a computerized main monitoring module, and the auxiliary control panel system according to the present invention.

According to one aspect of the present application, the nuclear power plant digital control system further includes a switch module respectively connected to the auxiliary control panel system and the computerized main monitoring module, and configured for switching to the auxiliary control panel system when the computerized main monitoring module fails under normal operation running conditions, and monitoring according to corresponding accident procedures and performing safety functions after the accident, so that the nuclear power plant is kept in a safe shutdown state. The auxiliary control panel includes three panel stations arranged side by side. Each panel station includes a safety-level control part and a non-safety-level control part partially connected to the safety-level control part. The non-safety-level control part includes non-safety-level information display, non-safety-level equipment operation, system operation screen display, alarm display, and non-safety-level digital control and display equipments displayed by the operation regulations, used to replace normal human-machine interface operation. The safety-level control part includes safety-level digital control and display equipment for operation of the safety-level equipment and information display.

The nuclear power plant digital auxiliary control panel system and design method, and control system according to the present have the following advantages.

By designing a control panel system based on the minimum configuration, the large scale and volume of the conventional hardware panels, and the large number of DCS cabinets required by the large number of hard-wired equipments and cables are solved effectively, which can solve the problem in the prior art that the human-machine interface of conventional hardware trays is relatively scattered, the workload of operators is quite heavy, the post-maintenance costs are relatively high, and the regular test methods are troublesome. When a main digital human-machine interface fails, the monitoring and control of the nuclear power plant is completed effectively by means of the digital auxiliary control panel system based on the minimum configuration, thereby satisfying the minimum collection required for safe running of the nuclear power plant and saving the costs to the greatest extent, so that the safe running of the nuclear power plant is effectively ensured.

### BRIEF DESCRIPTION OF THE DRAWINGS

The present invention will now be described in detail in conjunction with the accompanying drawings and embodiments below, in which:
Fig. 1 is a schematic diagram of a control panel system based on a minimum configuration according to a first embodiment of the present invention;
Fig. 2 is a schematic diagram of a display interface of the human-machine interface system panel station of the control panel system based on the minimum configuration in Fig. 1;
Fig. 3a is a schematic flowchart of a design method for an auxiliary control panel system based on a minimum configuration according to a second embodiment of the present invention;
Fig.3b is a schematic flowchart of sub-steps of step S100;
Fig. 3c is a schematic flowchart of sub-steps of step S130;
Fig. 4 is a detailed diagram of the establishment process of the function list based on the minimum configuration corresponding to Fig. 3;
Fig. 5 is a schematic diagram of the interface of the main control room (MCR) of a control system according to a third embodiment of the present invention;
Fig. 6 is a principle diagram of the panel station switching of the computerized main monitoring means (MCM) and the auxiliary control panel (ACP) according to one embodiment of the present invention;
Fig. 7 is a schematic diagram of the panel station control and display path scheme according to one embodiment of the present invention;
Fig. 8 is a schematic diagram of the panel station alarm according to one embodiment of the present invention;
Fig. 9 is a schematic diagram of the S-VDU screen implementation scheme of the safety-level digital control and display equipment according to one embodiment of the present invention;
Fig. 10 is a schematic diagram of the implementation scheme of the PAMS-VDU screen of the safety-level digital control and display equipment according to one embodiment of the present invention;
Fig. 11 is a schematic diagram of the periodic test plan of the panel station equipment according to one embodiment of the present invention; and
Fig. 12 is a schematic diagram of power supply of the auxiliary control panel (ACP) according to one embodiment of the present invention.

### DETAILED DESCRIPTION OF THE INVENTION

In order to solve the problems of unsynchronized operation and monitoring, poor safety and flexibility in the case of system failures and failures of the main digital human-machine interface in the prior art, the present invention provides a nuclear power plant digital auxiliary control panel system based on a minimum configuration, to complete the monitoring and control of the nuclear power plants and meets the minimum collection required for the safe operation of nuclear power plants, thereby ensuring the safety and operation of the nuclear power plants effectively.

The core idea of the present invention is to establish an auxiliary control panel system based on the minimum configuration list. The method includes determining the minimum configuration list of the minimum configuration auxiliary control panel system, classifying the minimum configuration list software and hardware implementation manners; designing the panel station of the minimum configuration auxiliary control panel system; and placing the required equipments into the required monitoring areas according to the designed panel, and installing and connecting the hardware and software of the areas requiring monitoring to the established minimum configuration auxiliary control panel system. The present invention analyzes operation objectives in emergency procedures and functions required to complete the objectives based on operation running standards of the nuclear power plant, and establishes a design-based minimum design configuration list; simulates emergency accident environment, records systems and equipments needed in actual accident process, checks and sorts out missing system and equipment information, and establishes a verification-based minimum verification configuration list based on the historical operation running data; and compares and analyzes the design-based minimum design configuration list and the verification-based minimum verification configuration list, to determine a minimum configuration function list required for the target accident.

When the main digital human-machine interface fails, the minimum configuration auxiliary control panel system established previously will automatically switch to the auxiliary control panel system for monitoring and operation, which can effectively solve the problem in the prior art that no auxiliary equipment for replacement and controll is available in system failure, and provides a more effective nuclear power plant with safety and effective power generation.

In order to enable one skilled in the art to understand the present invention more clearly, the present invention will be further described in detail with reference to the accompanying drawings and specific embodiments as following.

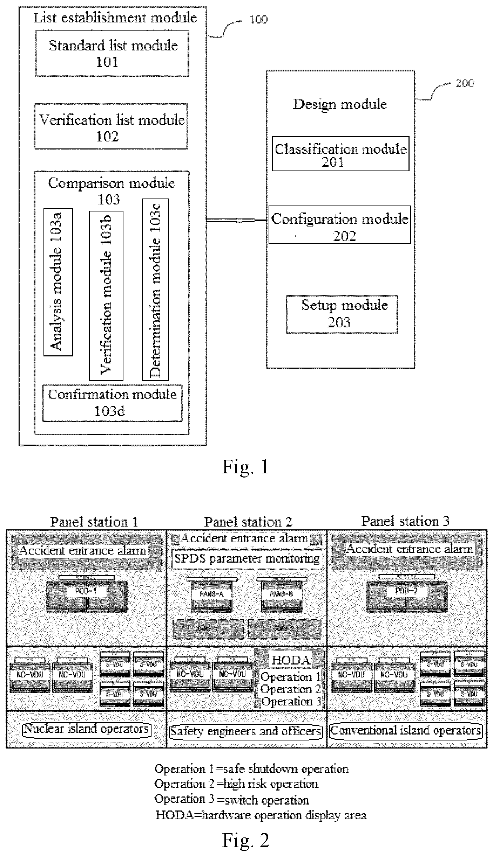

Fig. 1 is a schematic diagram of a control panel system based on a minimum configuration according to the first embodiment of the present invention. As shown in Fig. 1, the nuclear power plant digital auxiliary control panel system includes a list establishment module 100, connected to a nuclear power plant database, for acquiring operation running standards and historical operation running data of the nuclear power plant, and determining a minimum configuration function list according to the operation running standards and historical operation running data of the power plant; a design module 200, connected to the list establishment module 100, for classifying the minimum configuration function list and designing an auxiliary control panel based on the minimum configuration according to the classification.

The list establishment module 100 further includes: a standard list module 101, connected to the nuclear power plant database, and for analyzing operation objectives in emergency procedures and functions required to complete the objectives based on operation standards of the nuclear power plant, and establishing a design-based minimum design configuration list; a verification list module 102, connected to the nuclear power plant database, for simulating emergency accident environment, recording systems and equipments needed in actual accident process, checking and sorting out missing system and equipment information, and establishing a verification-based minimum verification configuration list based on the historical operation running data; a comparison module 103, connected to the standard list module 101 and the verification list module 102 respectively, for comparing and analyzing the design-based minimum design configuration list and the verification-based minimum verification configuration list, to determine a minimum configuration function list required for the target accident.

The comparison module 103 further includes: an analysis module 103a, a verification module 103b and a determination module 103c respectively connected to the analysis module 103a, and a confirmation module 103d connected to the verification module 103c. The analysis module 103a is confirgured for analyzing the received design-based minimum design configuration list and the verification-based minimum verification configuration list, and sending the analysis results to the verification module 103b and the determination module 103c. The verification module 103b is configured for verifying whether the design-based minimum design configuration list meets the defined requirements based on the analysis results and sending the verified results to the confirmation module 103d, if the design-based minimum design configuration list is greater than or equal to the verification-based minimum verification configuration list. The verification module 103b is also configured for receiving from the confirmation module 103c and adding an excess list in the verification-based minimum verification configuration list to the design-based minimum design configuration list, and reverifying whether the minimum design list meets the defined requirements. The determination module 103c is configured for redefining the minimum list based on the analysis result that the design-based minimum design configuration list being less than the verification-based minimum verification configuration list, and adding the verification-based minimum verification configuration list to the design-based minmum design configuration list for reverification, if the definition of the minimum configuration function list is met. The determination module 103c is also configured for deleting the non-conforming information in the minimum verification configuration list, if the design-based minimum design configuration list is smaller than the verification-based minimum verification configuration list, and the redefined minimum list fails to meet the definition requirements. The confirmation module 103d is configured for confirming the minimum configuration function list required by the target accident according to the verification results of the determination module 103c and the verification module 103b.

The design module 200 further includes a classification module 201 connected to the list establishment module 100, configured for classifying the minimum configuration function list, including classifying non-safety-level digital control and display equipment, classifying safety-level digital control and display equipment, and classifying safety-level equipment using conventional hardware technology; a configuration module 202 connected to the classification module 201, configured for configuring system softwares and hardware equipments according to different classifications, to design an auxiliary control panel based on the minimum configuration; and a setup module 203 connected to the configuration module 202, configured for setting up the minimum configuration auxiliary control panel to a specified area for monitoring and operation according to the designed auxiliary control panel based on the minimum configuration.

The minimum configuration of the auxiliary control panel system according to the present invention needs to meet the following conditions in its overall functional requirements. It is necessary to provide a human-machine interface system other than the digital human-machine interface system used under normal conditions. It mainly includes the following functions: 1) The smallest scale human-machine interface that needs to be implemented by safety-related equipment; 2) The smallest scale human-machine interface that needs to be fixed and continuously displayed; 3) The alternate human-machine interface system used to support the operation concept requirements in the normal human-machine interface system failure or degradation.

According to relevant regulations, the regulatory requirements for the minimum configuration function are detailed as following: monitoring the function of the nuclear fission barrier; executing and confirming shutdown of the reactor; starting the control function of the fission barrier safety system; monitoring means to maintain the normal operation of the power plant during the repair of the human-machine interface in the condition of normal human-machine interface failure; implementing emergency operation procedures; bringing the nuclear power plant to a safe state; implementing the means required for high-risk events in the probabilistic risk analysis.

According to the above-mentioned standard requirements, the present invention proposes to complete the functional design of the minimum configuration mainly from the following aspects: the means required to perform safe shutdown; the means required to perform high-risk events in probabilistic risk analysis; the means required to perform emergency operation procedures; the monitoring means to maintain the normal operation of the nulear power plant during the normal human-machine interface repair; the means required for continuous and fixed monitoring after the accident (PAMS); core cooling monitoring and important safety parameter monitoring (CCMS, SPDS); normal human-machine interface life monitoring and switch between the minimum configuration human-machine interface.

According to the above requirements, the minimum configuration function list establishment of the present invention is considered from the following considerations. Firstly, starting from the regulatory requirements for regulatory standards, and selecting emergency incidents, analyzing the operation objectives in the emergency procedures and the functions required to complete the objectives, and the system operation and display information required to complete the function, so as to establish the design-based minimum configuration function list. Secondly, by simulating the emergency accident environment, recording the human-machine interface information used by the operator in accordance with the accident rules and personal experience, and consulting the operator whether there is missing information during the execution of the accident, thereby establishing a verification-based minimum configuration function list. The design-based minimum configuration function list and the verification-based minimum configuration function list are compared and analyzed. If the design-based minimum configuration function list matches the verification-based minimum configuration function list, the minimum configuration function list required for the target accident can be obtained. If the verification-based minimum configuration function list is more than the design-based minimum configuration function list, the extra human-machine interface information needs to be further analyzed and researched. If it meets the definition of the minimum configuration function list, add it, otherwise delete. The minimum safety configuration list is repeatedly verified and finally confirmed.

Fig. 2 is a schematic diagram of the display interface of the man-machine interface system panel station of the auxiliary control panel system based on the minimal configuration in Fig. 1. As shown in Fig. 2, the panel station interface of the minimum configuration auxiliary control panel includes a first panel station for the nuclear island operators (panel station 1), a second panel station for safety engineers and officers (panel station 2), and a third panel station for conventional island operators (panel station 3). The three panel stations are arranged side by side in order from the left to the right. Different areas are controlled separately, thereby providing a clearer distribution area. The panel surface is more clear and simplified, which is convenient to operate and monitor for the operator.

The panel station configuration is described in detail as following. The panel station with the minimum configuration of the human-machine interface system is defined as the auxiliary control panel (ACP). Three panel stations are provided, namely, the panel station for the nuclear island operator, the panel station for the safety engineers and officers, and the panel station for onventional island operators. Each panel station includes three areas sequentially distributed from upper, middle and lower parts of the panel. Each panel is provided with a display area of the accident entrance alarm information at an upper area thereof, to provide operators with more convenient and effective monitoring means.

The panel station for nuclear island operators 1 (the first panel station) is configured as following: the upper part is provided with accident entrance alarm information, the middle part is provided with two NC-VDUs for displaying overview of the nuclear power plant (POD, Plant Overview Display); the lower part is provided with two NC-VDUs and four S-VDUs, one of the two NC-VDUs is used for system screen operation and display, and the other NC-VDU is used for system alarm information display. Four S-VDUs are used for the operation and display of 4 columns of safety-level equipments.

The panel station for safety engineers and officers 2 (the second platform): the upper part is provided with accident entrance alarm information; the middle part is provided with SPDS parameter monitoring information, CCMS monitoring information and two PAMS-VDUs. Two PAMS-VDUs are used for the display and recording of monitoring parameters after the accident; the lower part is provided with hardware operation display information, mainly including operations and displays required to perform safe shutdown, operations and displays required to perform high-risk events, and switch operation and display between normal human-machine interface and minimum configuration human-machine interface.

The panel station for conventional island operators 3 (the third panel station): the upper part is provided with accident entrance alarm information; the middle part is provided with two NC-VDUs for overview display of the nuclear power plant; the lower part is provided with two NC-VDUs and four S-VDUs. One of the two NC-VDUs is used for system screen operation and display, and the other NC-VDU is used for system alarm information display. Four S-VDUs are used for the operation and display of 4 columns of safety-level equipments. It can be seen from the distribution of each panel, each panel station can effectively monitor the system overview and has alarm information, providing a minimum configuration human-machine interface system, which can aviod relatively scattered human-machine interface of the conventional hardware panels and heavy workload of the operators effectively, and can provide a safer auxiliary monitoring means.

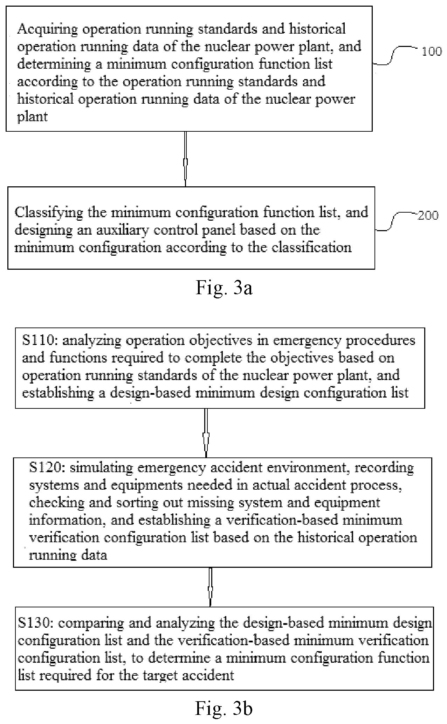

In order to realize the structure of the minimum auxiliary control panel system, Fig. 3a is a schematic flowchart of a design method for an auxiliary control panel system based on a minimum configuration according to a second embodiment of the present invention. The design method includes the following steps:
S100: acquiring operation running standards and historical operation running data of the nuclear power plant, and determining a minimum configuration function list according to the operation running standards and historical operation running data of the nuclear power plant;

Referring to Fig. 3b, step S100 further includes the following steps:
S110: analyzing operation objectives and functions required to complete the objectives in emergency procedures based on operation running standards of the nuclear power plant, and establishing a design-based minimum design configuration list;
S120: simulating emergency accident environment, recording systems and equipments needed in actual accident process, checking and sorting out missing system and equipment information, and establishing a verification-based minimum verification configuration list based on the historical operation running data; and
S130: comparing and analyzing the design-based minimum design configuration list and the verification-based minimum verification configuration list, to determine the minimum configuration function list required for the target accident.

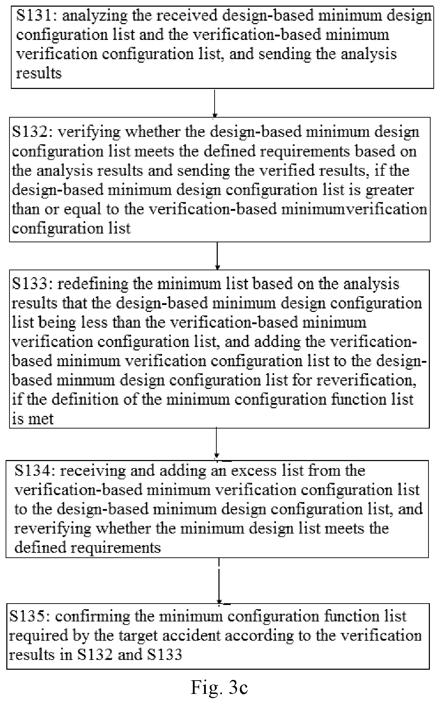

Referring to Fig. 3c, step S130 further includes the following steps:
S131: analyzing the received design-based minimum design configuration list and the verification-based minimum verification configuration list, and sending the analysis results;
S132: verifying whether the design-based minimum design configuration list meets the defined requirements based on the analysis results and sending the verified results, if the design-based minimum design configuration list is greater than or equal to the verification-based minimum verification configuration list;
S133: redefining the minimum list based on the analysis results that the design-based minimum design configuration list being less than the verification-based minimum verification configuration list, and adding the verification-based minimum verification configuration list to the design-based minmum design configuration list for reverification, if the definition of the minimum configuration function list is met;
S134: receiving and adding an excess list from the verification-based minimum verification configuration list to the design-based minimum design configuration list, and reverifying whether the minimum design list meets the defined requirements; and
S135: confirming the minimum configuration function list required by the target accident according to the verification results in S132 and S133.
S200: classifying the minimum configuration function list, and designing an auxiliary control panel based on the minimum configuration according to the classification.

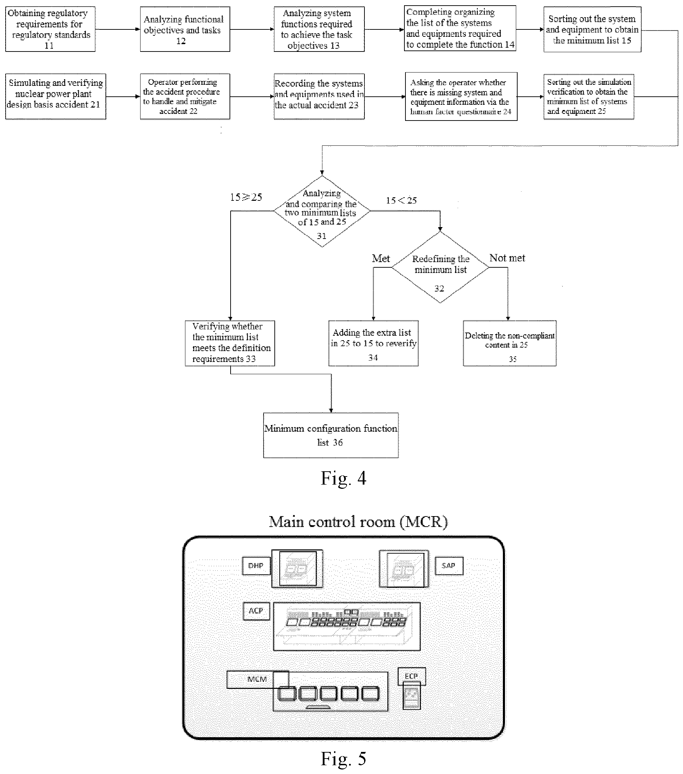

More specifically, as shown in Fig. 4, Fig. 4 is a detailed diagram of the establishment process of the function list based on the minimum configuration corresponding to Fig. 3. The establishment of the design-based minimum design configuration list is shown in step 15 in Fig. 4, wherein step 15 "sorting out the system and equipment to obtain the minimum list" comes from steps 11-14; step 11, obtaining regulatory requirements for regulatory standards; step 12, analyzing functional objectives and tasks; step 13, analyzing system functions required to achieve the task objectives; step 14, completing organizing the list of the systems and equipments required to complete the function, and forming "sorting out the system and equipment to obtain the minimum list" in step 15 to obtain the design-based minimum design configuration list. step 25, "sorting out the simulation verification to obtain the list of systems and equipment" (corresponding to step S120), step 25 comes from steps 21-24; step 21, simulating and verifying nuclear power plant design basis accident; step 22, the operator performing the accident procedure to handle and mitigate accident; step 23, recording the systems and equipments used in the actual accident; step 24, asking the operator whether there is missing system and equipment information via the human factor questionnaire; and forming "sorting out the simulation verification to obtain the list of systems and equipment" in step S25, and obtaining the verification-based minimum verification configuration list, thereby establishing a design-based minimum design configuration list 15 and a verification-based minimum verification configuration list 25.

Step 31: The system analyzes and compares the two minimum lists of 15 and 25. If the design-based minimum design configuration list 15 is greater than or equal to the verification-based minimum verification configuration list 25, in step 33, verifying whether the minimum list meets the definition requirements. When the definition requirements are met, go to step 36 and form a minimum configuration function list. If the design-based minimum design configuration list 15 is less than the verification-based minimum verification configuration list 25, in step 32, redefining the minimum list. When the requirements are met, the extra list in 25 is added to 15 to reverify (step 34). If the requirements are not met, delete the non-compliant content in 25 (step 35). The multiple verification and determination shown in the flowchart can better meet the minimum configuration requirements of the nuclear power plant, and perform safe operation of the nuclear power plant and equipment that need to be monitored more accurately.

Fig. 5 is a schematic diagram of the interface of the main control room (MCR) of a control system according to a third embodiment of the present invention. The system is a control system used in the digital system of a nuclear power plant, including a main control room (MCR). The main control room includes each part used to control the panel station of the main control room. The main control room includes a main controller (not shown), a diversified human-machine interface processing panels respectively connected to the main controller, a serious accidents panel, an emergency control panel and a computerized main monitoring module, a diversified human-machine interface processing panel (DHP) and a serious accidents panel (SAP) arranged side by side and located in the upper part of the main control room interface, and an emergency control panel (ECP) and a computerized main monitoring module (MCM) arranged side by side and located in the upper part of the main control room interface. The auxiliary control panel system (ACP) is located in the middle area between the upper and lower parts. The failure mode of the main control room shown in Fig. 5 is operated as following:
When MCM (main computerized mean, that is, the computerized main monitoring module) is available, complete the monitoring and control of the nuclear power plant through MCM and ECP (Emergency Control Panel).

When MCM is not available, monitoring and controlling the nuclear power plant is realized through ACP (Auxiliary Control Panel) and ECP. If the failure of NC-VDU (non-safety-level digital control and display device) on ACP is considered at the same time, the accident handling is completed through S-VDU (safety-level digital control and display equipment) on the ACP, the conventional hardware monitoring equipment and ECP;

When the reactor protection system (RPS) common mode failure causes the failure of MCM, ACP S-VDU and hardware manual operation functions, the monitoring and control of the nuclear power plant can be completed through the diversified human-machine interface panel (DHP).

When a serious accident occurs in a nuclear power plant, the serious accident panel (SAP) is used to prevent and mitigate the serious accident.

The above-mentioned nuclear power plant digital control system further includes a switch module (not shown) respectively connected to the auxiliary control panel system and the computerized main monitoring module (MCM), and configured for switching to the auxiliary control panel system when the computerized main monitoring module fails under normal operation running conditions, and monitoring according to corresponding accident procedures and performing safety functions after the accident, so that the nuclear power plant is kept in a safe shutdown state.

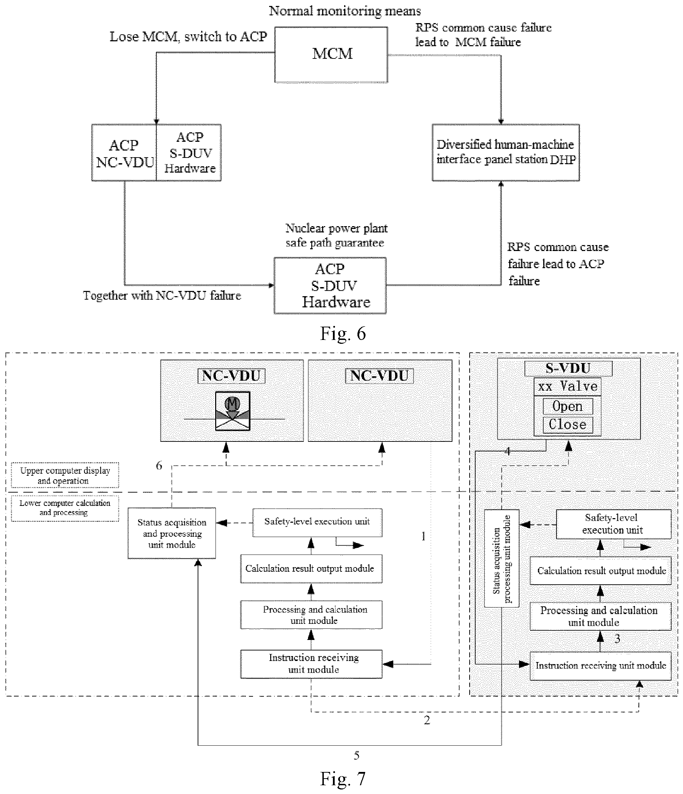

Fig. 6 is a principle diagram of the panel station switching of the computerized main monitoring means (MCM) and the auxiliary control panel (ACP) according to one embodiment of the present invention. The MCM/ACP panel station switching principle is detailed as following:
Under normal operating conditions of the nuclear power plant, the failure of the MCM is less than a preset time (for example, 4 hours), ACP is used to monitor and keep the nuclear power plant in a steady-state power operation state. When the parameters of the reactor core are unstable or the reactor core power fluctuates greatly, ACP is used to bring the nuclear power plant to and keep the nuclear power plant in a safe shutdown state.

Under normal operating conditions of the nuclear power plant, the failure of MCM is more than a preset time (for example, 4 hours), ACP is used to shut down the nuclear power plant and keep the nuclear power plant in a safe shutdown state.

Nuclear power plant design basis accident conditions and MCM failure: Whether MCM failure occurs during accident conditions, or design basis accident occurs during ACP operation (i.e., MCM has failed), corresponding accident procedures are followed to monitor on the ACP or execute the corresponding safety function after the accident, so that the nuclear power plant reaches and maintains a safe shutdown state.

When the common mode failure of the protection system (RPS) and the safety automation system (SAS) causes the failure of MCM, ACP S-VDU and hardware manual operation functions, switch to the diversified human-machine interface panel (DHP) to complete the monitoring and control of the nuclear power plant. The MCM/ACP panel station switching principle is detailed in the description in view of Fig. 6.

Fig. 7 is a schematic diagram of the panel station control and display path scheme according to one embodiment of the present invention. The purpose of the ACP panel station control and display path scheme according to the present invention is to implement NC-VDU to issue a selection instruction and select related equipment to operate on the S-VDU, which can avoid the problem of directly issuing control commands to safety-level equipments. At the same time, relevant control operations are completed through the control of the S-VDU and the safety-level system itself. Finally, the status of the controlled equipment is fed back to the NC-VDU and S-VDU, so as to complete simultaneous monitoring of information and operation results. The method can also avoid the risk of misoperation caused by system failures, as well as solve the synchronization and flexibility problems of operation and monitoring. The panel station distribution in Fig. 7 includes a non-safety-level part and a safety-level part. The non-safety-level part and the safety-level part each include the upper computer display and the lower computer calculation and processing. The "upper computer display" of the non-safety-level part includes two NC-VDUs. The "lower computer calculation and processing" of the non-safety-level part includes an instruction receiving unit module, a processing and calculation unit module, a calculation result output module, a non-safety-level execution unit and a status acquisition and processing unit module. The "upper computer display" of the safety-level part includes two S VDUs (safety level equipments), and the "lower computer calculation and processing" of the safety-level part includes an instruction receiving unit module, a processing and calculation unit module, a calculation result output module, and a safety-level execution unit and a status acquisition and processing unit module. The control and display path scheme is described as following:
1) In step 1, for the safety-level control equipment that needs to be operated, because NC-VDU has strong flexibility in operation and monitoring methods, it is necessary to select (call) relevant safety-level equipment in NC-VDU. The selection (call) instruction is sent to the non-safety-level instruction receiving unit. 2) In step 2, the non-safety level sends the received equipment selection instructions (not direct equipment control instructions) to the instruction receiving unit module of the safety-level system after isolation and processing. 3) In step 3, the instruction receiving unit module, searches the database for the corresponding device after receiving the non-safety-level device call instruction, and displays the controlled device and its current device status on the S-VDU. 4) In step 4, through the S-VDU's safety-level operation function, control instructions are issued to the safety-level execution unit through the instruction receiving unit, the processing and calculation unit, and the calculation result output module, so as to ensure the independence of safety-level equipment control operations. 5) In step 5, the status feedback of the command execution result of the safety-level execution unit is sent to the non-safety-level status acquisition and processing unit through the safety-level status acquisition and processing unit module. In this way, the signal transmission of the status of safety-level equipment is displayed via NC-VDU. At the same time, the safety-level status acquisition and processing unit will also send the signal to S-VDU for display. 6) In step 6, the non-safety-level status acquisition and processing unit sends the received status feedback signal to NC-VDU for display, which enables the NC-VDU to monitor safety-level equipment and provides a flexible monitoring method for nuclear power plant operators.

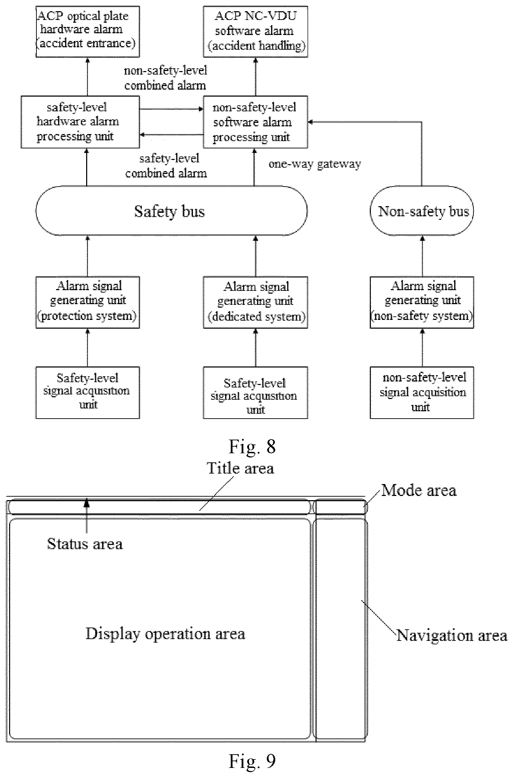

Fig. 8 is a schematic diagram of implementation scheme of the panel station alarm according to one embodiment of the present invention. The implementation scheme of the panel station alarm in Fig. 8 is detailed as following. Signal acquisition unit includes a safety-level signal acquisition unit and a non-safety-level signal acquisition unit, mainly collecting the field sensor signal and adjust it into a standard 4-20mA signal. Alarm signal generating unit includes a protection system (RPS) alarm signal generating unit, a special safety system (ESFAS) alarm signal generating unit, and a non-safety system (PSAS) alarm signal generating unit, and mainly trigger and generate digital alarm conditions or result signals. Safety bus mainly receives the digital alarm conditions or result signals from the protection system (RPS) and the special safety system (ESFAS), and sends the alarm result to the safety-level hardware alarm processing unit and the non-safety-level hardware alarm processing unit (the gateway through which the safety bus transmits to the non-safety level adopts a one-way gateway to prevent low-safety-level signals from affecting high-safety-level signals). Non-safety bus mainly receives digital alarm conditions or result signals from the non-safety-level system (PSAS), and sends the alarm results to the non-safety-level hardware alarm processing unit at the same time. Safety-level hardware alarm processing unit realizes the functions of safety-level hardware alarm logic processing, flashing, re-flashing, confirmation and sound alarm. Non-safety-level software alarm processing unit realizes the functions of non-safety-level digital alarm logic processing, flashing, re-flashing, confirmation and sound alarm. ACP optical plate alarm equipment accepts the alarm logic processing results of the safety-level hardware alarm processing unit, and indicates alarm generation and alarm disappearance through flashing of different frequencies. The optical plate alarm is mainly used to guide the accident entrance. ACP NC-VDU software alarm equipment accepts the alarm logic processing results of the non-safety-level software alarm processing unit, and indicates alarm generation and alarm disappearance through flashing of different frequencies. The ACP NC-VDU software alarm is mainly used for the guidance in the accident handling process and the recording of the optical plate alarm signal. Alarm horn equipment: ACP panel station is equipped with two horns, one horn is used for sound reminder when alarm occurs, and the other horn is used for sound reminder when alarm disappears. The optical plate hardware alarm and NC-VDU software alarm use a same horn for sound reminder of alarm occurrence, and a same horn for sound reminder of alarm disappearance. Safety-level combined alarm: the safe founction alarms that are generated by the combination of non-safety-level and safety-level signals are hard-wired to the safety-level hardware alarm processing unit through the non-safety-level software alarm processing unit for alarm logic processing and further sent to the ACP optical plate alarm display. Non-safety-level combined alarm: the non-safe founction alarms that are generated by the combination of non-safety-level and safety-level signals are sent to the non-safety-level software alarm processing unit for alarm logic processing via the safety-level hardware alarm processing unit and through the safety bus, and is further sent to ACP NC-VDU for alarm display after alarm logic processing. The non-safety-level combined alarm provides a safer guarantee and effective operation for the effective use of the system.

Fig. 9 is a schematic diagram of the S-VDU screen implementation scheme of the safety-level digital control and display device according to one embodiment of the present invention. The S-VDU screen implementation scheme is detailed as following.

Status area is used to display the diagnostic results of the S-VDU self-diagnosis. When the S-VDU is operating normally, the status display bar is flashing in green.When the S-VDU is abnormal, the status display bar is continuously displayed in red. Different colors and different status displays provide a more intuitive reminder for the operators. Title area is used to display the overall description of the current screen, including project code, screen code, screen name, etc. Mode area is used to display the management mode of S-VDU. Display operation area is used to display the main process of the system by means of a flowchart, and arrange and display the relevant safety-level technological parameters and safety-level actuator operation and status in the corresponding position of the process line. Navigation area is used to provide screen navigation buttons, including "System Menu", "Operation Menu", "Previous Page", "Next Page", "System Status" and other buttons.

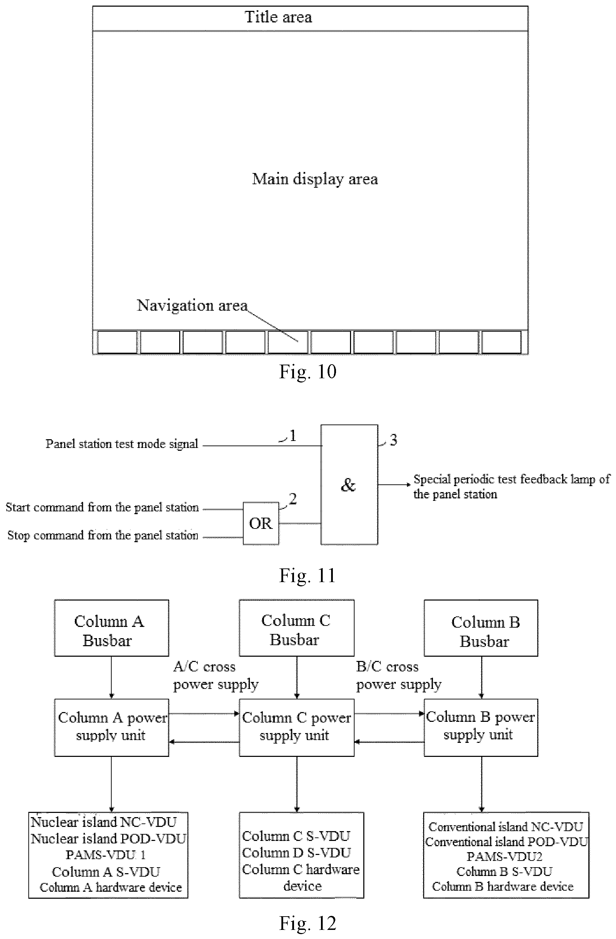

Fig. 10 is a schematic diagram of the implementation scheme of the PAMS-VDU screen of the safety-level digital control and display device according to one embodiment of the present invention. In the PAMS-VDU screen implementation scheme in Fig. 10, the parameter content of the PAMS function list is based on the system design and combined with the parameter selection requirements of IEEE497. The display scheme of PAMS parameters is detailed as following:
All PAMS A/B/C parameters are displayed in PAMS-VDU and copied in ACP NC-VDU. For D/E parameters, if they belong to the scope of the minimum configuration function list, enter ACP NC-VDU for display; if they are not within the scope of the minimum configuration function list, the display will be realized by MCM. The MCM includes display of all PAMS A/B/C/D/E parameters.

The PAMS-VDU screen implementation scheme is detailed as following, which includes the following areas: Header title area, displaying screen code, screen name, PAMS-VDU working mode, PAMS-VDU life monitoring status, date and time. Main display area: real-time display of main PAMS parameters, logs and trend records. Navigation area: the navigation area buttons are mainly used to complete the page navigation function. By arranging the page-turning navigation buttons, up to 10 navigation buttons can be arranged.

Fig. 11 is a schematic diagram of the periodic test plan of the panel station equipment according to one embodiment of the present invention. The ACP panel station test method and steps according to the present invention are described as following. The main control room operator switches the operating panel station to the test mode. The main control room operator performs start or stop operation of the test mode on the operating panel station. The operation command is sent to the control logic cabinet on the first floor of the DCS to perform the logic operation. The control logic cabinet sends the calculation result directly back to the special test feedback light on the operation panel of the main control room, and does sends it to the on-site actuator. After the special test feedback light on the operation panel station of the main control room receives the test start or stop feedback signal, the main control room operator observes the feedback result to determine whether the equipment can operate normally.

The specific implementation of the technical scheme is shown in Fig. 11.
Function block 1: The panel station test mode signal comes from the logic of 3 out of 1 of the 3 switches of the panel station.
Function block 2: The device start command from the panel station and the device stop command from the panel station are "OR" logically processed. Generally, only one type of command is issued at the same time;
Function block 3: The calculation results of function block 1 and function block 2 are AND logically processed, and then the calculation results are sent to the special periodic test feedback lamp of the panel station. The operator confirms whether the start command or equipment stop command has been sent to the first floor control logic cabinet of the DCS (Digital Control System) by observing whether the feedback lamp is on.

Fig. 12 is a schematic diagram of the power supply scheme of the auxiliary control panel (ACP) according to one embodiment of the present invention. The schematic diagram of the power supply scheme of the auxiliary control panel (ACP) is detailed as following.

Two NC-VDUs of the nuclear island use column A power supply, and two NC-VDUs of the conventional island use column B power supply. Two POD-VDUs on nuclear islands are powered by column A power supplies. Two POD-VDUs of conventional islands are powered by column B power supplies. Two PAMS-VDUs are powered by column A and B power supplies respectively. Four S-VDUs of nuclear island are respectively powered by column A, column B, column C, and column D (column D is powered by column C power supply). Four S-VDUs of a conventional island are respectively powered by column A, column B, column C, and column D (column D is powered by column C). Column A panle station hardware equipments are powered by the corresponding DCS cabinet triggered by the logic of the corresponding column A. Column B panle station hardware equipments are powered by the corresponding DCS cabinet triggered by the logic of the corresponding column B. Column C panle station hardware equipments are powered by the DCS cabinet that is triggered by the logic of the corresponding column C. A/C column adopts cross power supply, and B/C column adopts cross power supply, so as to ensure that when only column A power supply is left, A/C column panle station equipments are available; when only column B power supply is left, B/C column panle station equipments are available; when only the C power supply is left, the A/B/C/D panle station equipments are available, so that any two columns of power supply are lost, the panle station can have at least two columns of S-VDU and one column of NC-VDU, one column of POD-VDU and one column of PAMS-VDU, so as to achieve the purpose of handling the accident.

The nuclear power plant digital auxiliary control panel system and design method, and control system according to the present have the following advantages: The large scale and volume of the conventional hardware panels, and the large number of DCS cabinets required by the large number of hard-wired equipments and cables are solved effectively, which can solve the problems in the prior art that the human-machine interfaces of conventional hardware trays are relatively scattered, workload of operators is quite heavy, the post-maintenance costs are relatively high, and the regular test methods are troublesome. When a main digital human-machine interface fails, the monitoring and control of the nuclear power plant is completed effectively by means of the digital auxiliary control panel system based on the minimum configuration, thereby satisfying the minimum collection required for safe running of the nuclear power plant and saving the costs to the greatest extent, so that the safe running of the nuclear power plant is effectively ensured. The key innovation of the present invention is: in the minimum configuration function list establishment method, after the minimum configuration human-machine interface system panel configuration is established, the control room degraded operation mode of the system, MCM and ACP switching principle and switching solution, ACP panel control and display path solution, ACP panel alarm implementation solution, ACP panel software screen implementation program, panel equipment periodic test program and panel power supply plan are realized.

It should be noted that, when the above-mentioned embodiments provide the auxiliary control panel system to implement the design method, the division of the functional modules is only used as an example for illustration. Actually, the above-mentioned functions can be allocated to different functional modules according to needs. In other words, the internal structure of the device can be divided into different functional modules, to complete all or part of the functions described above. In addition, the auxiliary control panel system, the design method, and the control system embodiments provided in the embodiments belong to a same concept. The specific implementation process can be seen in the description in the system and method embodiments, and which will not be repeated.

One ordinary skill in the art can understand that all or part of the steps in the embodiments of the present invention can be completed by hardwares, or by a program instructing relevant hardwares. The program can be stored in a computer-readable storage medium. The storage medium can be a read-only memory, a magnetic disk or an optical disk, etc.

The above descriptions are only preferred embodiments of the present invention and are not intended to limit the present invention. Any modification, equivalent replacement, improvement, made within the spirit and principle of the present invention shall be included in the protection scope of the present invention.

## Claims

1. A nuclear power plant digital auxiliary control panel system, **characterized in that** the nuclear power plant digital auxiliary control panel system comprises:
a list establishment module (100), connected to a nuclear power plant database, for acquiring operation running standards and historical operation running data of the nuclear power plant, and determining a minimum configuration function list according to the operation running standards and historical operation running data of the power plant; and
a design module (200), connected to the list establishment module (100), for classifying the minimum configuration function list and designing an auxiliary control panel based on the minimum configuration according to the classification.

2. The nuclear power plant digital auxiliary control panel system of claim 1, **characterized in that** the list establishment module (100) comprises:
a standard list module (101), connected to the nuclear power plant database, for analyzing operation objectives in emergency procedures and functions required to complete the objectives based on operation standards of the nuclear power plant, and establishing a design-based minimum design configuration list;
a verification list module (102), connected to the nuclear power plant database, for simulating emergency accident environment, recording systems and equipments needed in actual accident process, checking and sorting out missing system and equipment information, and establishing a verification-based minimum verification configuration list based on the historical operation running data;
a comparison module (103), connected to the standard list module (101) and the verification list module (102) respectively, for comparing and analyzing the design-based minimum design configuration list and the verification-based minimum verification configuration list, to determine a minimum configuration function list required for a target accident.

3. The nuclear power plant digital auxiliary control panel system of claim 2, **characterized in that** the comparison module (103) comprises: an analysis module (103a), a verification module (103b) and a determination module (103c) respectively connected to the analysis module (103a), and a confirmation module (103d) connected to the verification module (103b); wherein
the analysis module (103a) is confirgured for analyzing the received design-based minimum design configuration list and the verification-based minimum verification configuration list, and sending the analysis results to the verification module (103b) and the determination module (103c);
the verification module (103b) is configured for verifying whether the design-based minimum design configuration list meets the defined requirements based on the analysis results and sending the verified results to the confirmation module (103d), if the design-based minimum design configuration list is greater than or equal to the verification-based minimum verification configuration list;
the determination module (103c) is configured for redefining the minimum list based on the analysis result that the design-based minimum design configuration list being less than the verification-based minimum verification configuration list, and adding the verification-based minimum verification configuration list to the design-based minmum design configuration list for reverification, if the definition of the minimum configuration function list is met;
the verification module (103b) is also configured for receiving from the confirmation module (103c) and adding an excess list in the verification-based minimum verification configuration list to the design-based minimum design configuration list, and reverifying whether the minimum design list meets the defined requirements; and
the confirmation module (103d) is configured for confirming the minimum configuration function list required by the target accident according to the verification results of the determination module (103c) and the verification module (103b).

4. The nuclear power plant digital auxiliary control panel system of claim 3, **characterized in that** the determination module (103c) is configured for deleting non-conforming information in the minimum verification configuration list, if the design-based minimum design configuration list is smaller than the verification-based minimum verification configuration list, and the redefined minimum list fails to meet the definition requirements.

5. The nuclear power plant digital auxiliary control panel system of claim 1, **characterized in that** the design module (200) comprises: a classification module (201) connected to the list establishment module (100), a configuration module (202) connected to the classification module (201), and a setup module (203) connected to the configuration module (202); wherein
the classification module (201) is configured for classifying the minimum configuration function list, comprising classifying non-safety-level digital control and display equipments, classifying safety-level digital control and display equipments, and classifying safety-level equipments using conventional hardware technology;
the configuration module (202) is configured for configuring system softwares and hardware equipments according to different classifications, to design an auxiliary control panel based on the minimum configuration; and
the setup module (203) is configured for setting up the minimum configuration auxiliary control panel to a specified area for monitoring and operation according to the designed auxiliary control panel based on the minimum configuration.

6. The nuclear power plant digital auxiliary control panel system of any one of claims 1 to 5, **characterized in that** the minimum control panel system comprises a first panel station for nuclear island operators, a second panel station for safety engineers and officers, and a third panel station for conventional island operators, and each panel station comprises an accident entrance alarm information.

7. The nuclear power plant digital auxiliary control panel system of claim 6, **characterized in that** each panel station comprises three areas sequentially distributed from upper, middle and lower parts of the panel, and each panel is provided with a display area of the accident entrance alarm information at an upper area thereof.

8. A design method for nuclear power plant digital auxiliary control panel, **characterized in that** the design method comprises the steps of:
S100: acquiring operation running standards and historical operation running data of the nuclear power plant, and determining a minimum configuration function list according to the operation running standards and historical operation running data of the nuclear power plant; and
S200: classifying the minimum configuration function list, and designing an auxiliary control panel based on the minimum configuration according to the classification.

9. The design method of claim 8, **characterized in that** step S100 comprises the steps of:
S110: analyzing operation objectives and functions required to complete the objectives in emergency procedures based on operation running standards of the nuclear power plant, and establishing a design-based minimum design configuration list;
S120: simulating emergency accident environment, recording systems and equipments needed in actual accident process, checking and sorting out missing system and equipment information, and establishing a verification-based minimum verification configuration list based on the historical operation running data; and
S130: comparing and analyzing the design-based minimum design configuration list and the verification-based minimum verification configuration list, to determine the minimum configuration function list required for the target accident.

10. The design method of claim 9, **characterized in that** step S130 comprises the steps of:
S131: analyzing the received design-based minimum design configuration list and the verification-based minimum verification configuration list, and sending the analysis results;
S132: verifying whether the design-based minimum design configuration list meets the defined requirements based on the analysis results and sending the verified results, if the design-based minimum design configuration list is greater than or equal to the verification-based minimum verification configuration list;
S133: redefining the minimum list based on the analysis results that the design-based minimum design configuration list being less than the verification-based minimum verification configuration list, and adding the verification-based minimum verification configuration list to the design-based minmum design configuration list for reverification, if the definition of the minimum configuration function list is met;
S134: receiving and adding an excess list from the verification-based minimum verification configuration list to the design-based minimum design configuration list, and reverifying whether the minimum design list meets the defined requirements; and
S135: confirming the minimum configuration function list required by the target accident according to the verification results in S132 and S133.

11. A nuclear power plant digital control system, for use in a nuclear power plant digital system, comprising a main control room, the main control room comprises a main controller, and a diversified human-machine interface processing panels respectively connected to the main controller, a serious accidents panel, an emergency control panel, and a computerized main monitoring module, **characterized in that**, the nuclear power plant digital control system comprises the nuclear power plant digital auxiliary control panel system of any one of claims 1 to 7.

12. The nuclear power plant digital control system of claim 11, **characterized in that** when the main monitoring module is available, monitoring and control of the nuclear power plant is completed through the main monitoring module and the emergency control panel;
when the main monitoring module is not available, the monitoring and control of the nuclear power plant is completed through the auxiliary control panel and the emergency control panel;
when the common mode failure of a reactor protection system leads to function loss of the main monitoring module and the auxiliary control panel, the monitoring and control of the nuclear power plant is completed through the diversified human-machine interface panel station; and
when a serious accident occurs in the nuclear power plant, prevention and mitigation function of the serious accident is realized through the serious accident panel.

13. The nuclear power plant digital control system of claim 11, **characterized in that** the nuclear power plant digital control system further comprises a switch module respectively connected to the auxiliary control panel system and the computerized main monitoring module, and configured for switching to the auxiliary control panel system when the computerized main monitoring module fails under normal operation running conditions, and monitoring according to corresponding accident procedures and performing safety functions after the accident, so that the nuclear power plant is kept in a safe shutdown state.

14. The nuclear power plant digital control system of claim 13, **characterized in that** the switch module is configured for switching to the auxiliary control panel when the main monitoring module fails less than a preset time under normal operation running conditions of the nuclear power plant, and monitoring via the auxiliary control panel and keeping the nuclear power plant in a steady-state power running state;
the switch module is configured for switching to the auxiliary control panel when the main monitoring module fails longer than a preset time under the normal operation running conditions of the nuclear power plant, and closing the nuclear power plant via the auxiliary control panel and keeping the nuclear power plant in a safe shutdown state;
the switch module is configured for switching to the auxiliary control panel in condition of design basis accident and failure of the main monitoring module, and monitoring via the auxiliary control panel according to corresponding accident procedure or executing corresponding post-accident safety function, so that the nuclear power plant reaches and maintains a safe shutdown state.

15. The nuclear power plant digital control system of claim 11, **characterized in that** the auxiliary control panel comprises three panel stations arranged side by side; each panel station comprises a safety-level control part and a non-safety-level control part partially connected to the safety-level control part;
the non-safety-level control part comprises non-safety-level information display, non-safety-level equipment operation, system operation screen display, alarm display, and non-safety-level digital control and display equipments displayed by the operation regulations, used to replace normal human-machine interface operation; and
the safety-level control part comprises safety-level digital control and display equipment for operation of the safety-level equipment and information display.

16. The nuclear power plant digital control system of claim 15, **characterized in that** the non-safety-level part and the safety-level part both comprise: upper computer display and lower computer calculation and processing, and the upper computer display of the non-safety-level part comprises NC-VDU, the lower computer calculation and processing of the non-safety-level part comprises: an instruction receiving unit module, a processing and calculation unit module, a calculation result output module, a non-safety-level execution unit and a status acquisition and processing unit module; the upper computer display of the safety-level part comprises S-VDU, the lower computer calculation and processing of the safety-level part comprises: an instruction receiving unit module, a processing and calculation unit module, a calculation result output module, a safety-level execution unit and a status acquisition processing unit module;
the NC-VDU of the non-safety-level part is used to select corresponding safety-level equipment and
send selection instructions to the instruction receiving unit module of the non-safety-level part;
the instruction receiving unit module of the non-safety-level part is used to receive the equipment selection instructions, and send the equipment selection instructions to the instruction receiving unit module of the safety-level part after the received equipment selection instruction is isolated and processed;
the instruction receiving unit module of the safety-level part is used to search for safety-level equipment corresponding to the equipment selection instruction in the database, and display the searched safety-level equipment and the current equipment status thereof on the S-VDU of the safety-level part;
the safety-level part is used to send control instructions to the safety-level execution unit of the safety-level part via the safety-level operation function of the S-VDU of the safety-level part and the instruction receiving unit module, the processing and calculation unit module, and the calculation result output module of the safety-level part;
the safety-level execution unit of the safety-level part is used to perform corresponding control operations according to the control instructions, and send the status feedback signal of the execution result to the non-safety-level status acquisition and processing unit module of the non-safety-level part via the safety-level status acquisition and processing unit module of the safety-level part; and
the non-safety-level status acquisition and processing unit module of the non-safety-level part is used to send the received status feedback signal to the NC-VDU of the non-safety-level part for display.

17. The nuclear power plant digital control system of claim 15, **characterized in that** the panel station of the auxiliary control panel is also used to send panel test mode signal to a control logic cabinet of the digital control system when the panel station is in a test mode;
the panel station of the auxiliary control panel is used to send a start command or a stop command of the panel station to the control logic cabinet of the digital control system when the panel station is in a test mode; and
the panel station of the auxiliary control panel is used to receive feedback result of the control logic cabinet of the digital control system, and feedback the feedback result on a special periodic test feedback lamp of the panel station.
